# EUROPÄISCHE PATENTSCHRIFT

(11) **EP 0 903 543 B1**
(45) Veröffentlichungstag und Bekanntmachung des Hinweises auf die Patenterteilung: **22.05.2002**
(21) Anmeldenummer: 98117038.4
(22) Anmeldetag: 09.09.1998
(51) Int. Cl.: F24D 3/10, F24D 19/10

(54) **Verteilervorrichtung für einen mit einem flüssigen Medium betriebenen Kreislauf einer Wärme- oder Kälteversorgungsanlage**
Distributor for a fluid filled circuit of a heating or cooling installation
Distributeur d'un circuit rempli de fluide d'une installation de chauffage ou de réfrigération

(30) Priorität: 18.09.1997 DE 29716779 U
(43) Veröffentlichungstag der Anmeldung: 24.03.1999
(73) Patentinhaber: Watts Dumser GmbH & Co. KG, 76829 Landau (DE)
(72) Erfinder: Dumser, Josef, 76829 Landau/Pfalz (DE)
(74) Vertreter: Patentanwälte Möll und Bitterich

(56) Entgegenhaltungen:
- EP-A- 0 508 958
- DE-A- 3 119 658
- DE-A- 19 650 892
- DE-U- 8 903 159
- DE-U- 9 412 852
- PATENT ABSTRACTS OF JAPAN vol. 1997, no. 12, 25. Dezember 1997 (1997-12-25) & JP 09 210380 A (MITSUBISHI KAGAKU SANSHI KK;NIPPON THERMOSTAT KK), 12. August 1997 (1997-08-12)

## Beschreibung

Die Erfindung betrifft eine Verteilervorrichtung für einen mit einem flüssigen Medium betriebenen Kreislauf für eine Wärme- oder Kälteversorgungsanlage gemäß dem Oberbegriff des Patentanspruchs 1.

Verteilervorrichtungen dieser Art dienen als sogenannte Heizkreisverteiler dem einstellbaren bzw. regulierbaren Aufteilen des in einem Heizungssystem zirkulierenden Heizmediums an örtliche Einzelheizstellen; dies ist vor allem bei Fußbodenheizungen erforderlich. Eine Fußbodenheizung besteht aus mehreren einzelnen Heizkreisen, die von der Sammelheizung über eine Mehrzahl von Einstell- und Regelorganen abgezweigt werden. Diese Einstell- und Regelorgane benötigen viel Platz und müssen aus Gründen der Bedienung und Wartung zugänglich untergebracht werden.

Insbesondere bei Fußbodenheizungen ist es erforderlich, die Heizkreise für die einzelnen Räume jeweils getrennt voneinander regeln zu können. Da die Heizkreise in Abhängigkeit von der Grundfläche der Räume jeweils unterschiedlich groß sind, müssen neben den üblichen Regelventilen, die von Hand, mittels eines elektrischen Stellantriebs oder über einen Thermostaten gesteuert werden, sogenannte Durchflußmengenbegrenzer angeordnet sein, mittels deren die maximalen Durchflußmengen je Heizkreis eingestellt werden können.

Um Platz zu sparen, ist es bereits bekannt, als Verteilervorrichtung Rohrabschnitte zu verwenden, die jeweils über Absperrorgane mit dem Vor- oder Rücklauf verbunden sind. In diesen Rohrabschnitten werden im Rohrmantel an um 180° versetzt einander gegenüberliegenden Stellen paarweise Öffnungen angebracht.

Dabei wird in eine Öffnung ein Betätigungsorgan eingesetzt, das unmittelbar auf ein in die andere Öffnung eingesetztes Ventil einwirkt (DE 89 03 159 U1).

Da Regelventile immer gegen den Ventilkörper angeströmt werden müssen, können diese bei Heizkreisverteilem nur im Rücklauf eingesetzt werden, Durchflußmengenbegrenzer werden dagegen im Vorlauf eingebaut. Dies bedeutet, daß bei bekannten Heizkreisverteilem sowohl im Vorlauf, als auch im Rücklauf auf den Durchfluß regulierend einwirkende Armaturen vorzusehen sind.

Unabhängig hiervon sind die Meß- und Anzeigeorgane, wie zum Beispiel Durchflußmengenanzeiger und Temperaturmeßgeräte. Um diese zugleich unterbringen zu können, ist bei dem eingangs genannten Heizkreisverteiler vorgesehen, Durchfluß- und Temperaturmeßeinheiten in den Rücklauf der einzelnen Heizkreise einzubauen und sie mit den Organen zur Regelung des Heizkreislaufs zu kombinieren, während im Vorlauf lediglich die Organe zur Voreinstellung der maximalen Durchflußmenge angeordnet sind. Somit sind mit Ventilen ausgestattete Armaturen sowohl im Vorlauf als auch im Rücklauf angeordnet.

Die Anordnung von Regelorganen im Rücklauf einer Fußbodenheizung zeigt die DE 196 50 892 A1. Diese Regelorgane bestehen hier aus einem Rücklauftemperaturbegrenzer, dem ein Raumthermostatventil vorgeschaltet ist, um die Innentemperatur eines mit einer Fußbodenheizung ausgestatteten Raumes mit in die Regelung der Fußbodenheizung einbeziehen zu können.

Zur Verwendung an Kompaktheizkörpem ist es auch bekannt geworden, ein Regulierventil in Eckventilauslegung mit einem Durchflußmengenbegrenzer in einem Baukörper zusammenzufassen (DE 43 25 737 C2). Bei diesem Regulierventil, das im Vorlauf angeordnet ist, mithin frontal angeströmt wird, weist der Durchflußmengenbegrenzer in einem äußeren Rohrteil eine Durchflußöffnung und in einem inneren, ebenfalls rohrförmigen Teil eine Anzahl von Öffnungen unterschiedlichen Durchmessers auf, die durch Drehung des inneren Rohrteils mit der Durchflußöffnung in dem äußeren Rohrteil in Deckung gebracht werden können. Auf diese Weise können mittels eines Steckschlüssels von außen einige fest vorausbestimmte Durchflußmengen eingestellt werden. Dies entspricht der Verwendung von Kompaktheizkörpern in bestimmten Größen.

Vor diesem Hintergrund im Stand der Technik liegt der Erfindung die Aufgabe zugrunde, eine Möglichkeit zu schaffen, um bei einer Verteilervorrichtung der eingangs angegebenen Art, insbesondere einem Heizkreisverteiler, zu einer einfacheren, montage- und bedienungsfreundlichen, vor allem aber wirtschaftlicheren Bauweise zu kommen.

Gemäß der Erfindung wird diese Aufgabe durch die im Anspruch 1 angegebenen Merkmale gelöst.

Vorteilhafte Weiterbildungen ergeben sich aus den Unteransprüchen.

Erfindungsgemäß werden alle Regel- und Absperrorgane, also Durchflußmengenbegrenzer und Regulierventile, jeweils in einer Armatur im Rücklaufrohr zusammengefaßt, wo die Ventilkörper strömungsgünstig frontal angeströmt werden, während Meß- und Anzeigeorgane, soweit solche überhaupt vorzusehen sind, im Vorlaufrohr angeordnet sind. Dabei spielt die jeweilige Bauart der einzelnen Organe keine entscheidende Rolle.

Der größte bedienungstechnische Vorteil wird erreicht, wenn in dem erfindungsgemäßen Heizkreisverteiler, bei dem, wie üblich, Vor- und Rücklaufrohr parallel zueinander und jeweils horizontal angeordnet sind, das Rücklaufrohr in der unteren und das Vorlaufrohr in der oberen Ebene liegen. Es ist dann auf einfache Weise möglich, bei den einzelnen Heizkreisläufen jeweils in der unteren Ebene von Hand die maximale Durchflußmenge einzustellen, die mittels der in der oberen Ebene angeordneten Durchflußmengenanzeiger leicht und übersichtlich kontrolliert werden kann. Nach Voreinstellung der maximalen Durchflußmengen mittels entsprechender Werkzeuge kann auf die Ventile in üblicher Weise ein Drehknopf zur Handeinstellung oder ein elektrischer Stellantrieb aufgesetzt werden. Durch die Anordnung der Durchflußmengenanzeiger im - oberen - Vorlaufrohr verbleibt oberhalb des Heizkreisverteilers genügend Platz für die Unterbringung der elektrischen Regel- und Steuerorgane einschließlich der hierfür erforderlichen Elektroinstallation.
- Fig. 1: eine Ansicht eines Heizkreisverteilers,
- Fig. 2: einen Querschnitt durch den Heizkreisverteiler gemäß Fig. 1,
- Fig. 3: ein Ausführungsbeispiel für einen erfindungsgemäß zu verwendenden Durchflußmengenanzeiger teils in Ansicht, teils im Schnitt,
- Fig. 4: ein Ausführungsbeispiel für ein erfindungsgemäß zu verwendendes Regelventil mit Durchflußmengenbegrenzung teils in Ansicht, teils im Schnitt und
- Fig. 5: eine weitere Ausführungsform eines Heizkreisverteilers in Ansicht.

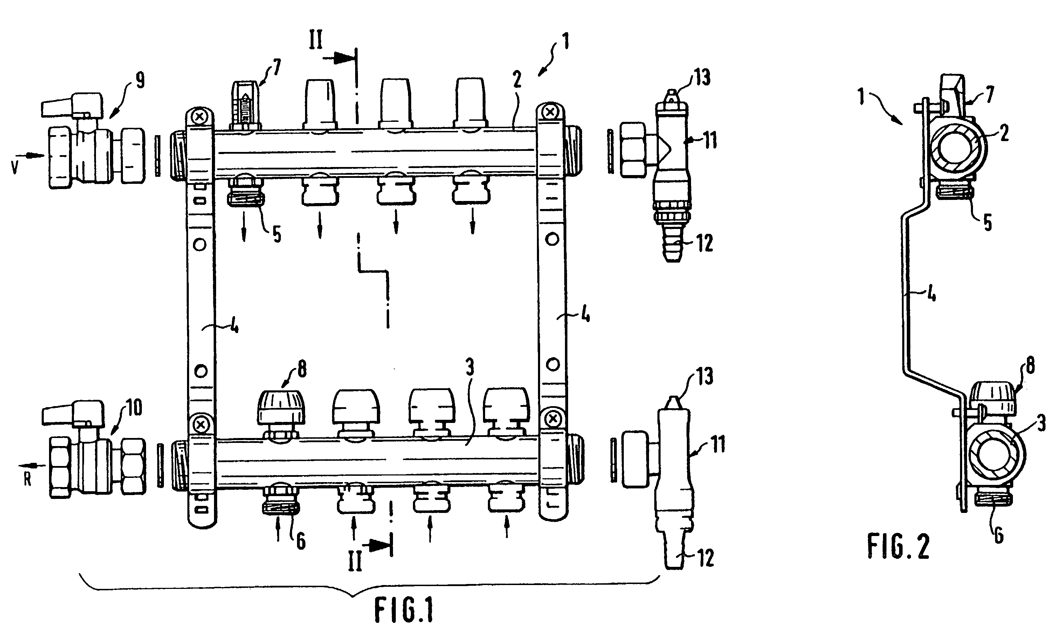

Der in Fig. 1 in Seitenansicht sowie in Fig. 2 im Querschnitt dargestellte Heizkreisverteiler 1 umfaßt ein - oberes - Vorlaufrohr 2 und ein - unteres - Rücklaufrohr 3. Das Vorlaufrohr 2 und das Rücklaufrohr 3 werden durch zwei Konsolen 4 zusammengefaßt und auf Abstand gehalten, mittels deren sie auch an einer Wand befestigt werden können. Vorlauf und Rücklauf sind durch Pfeile V bzw. R angedeutet.

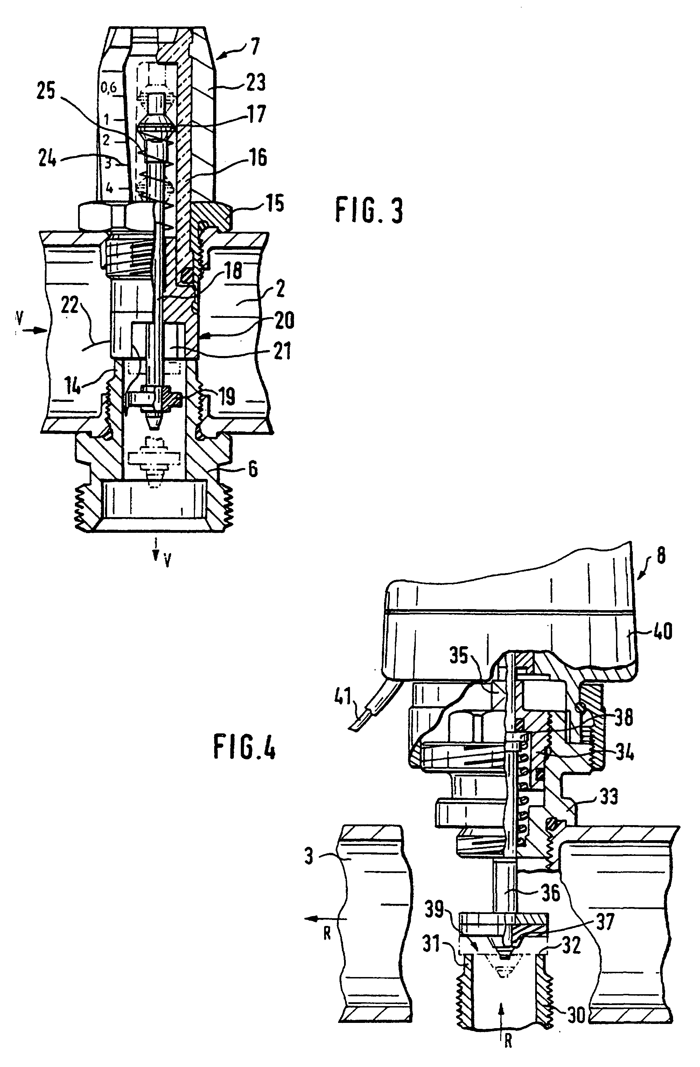

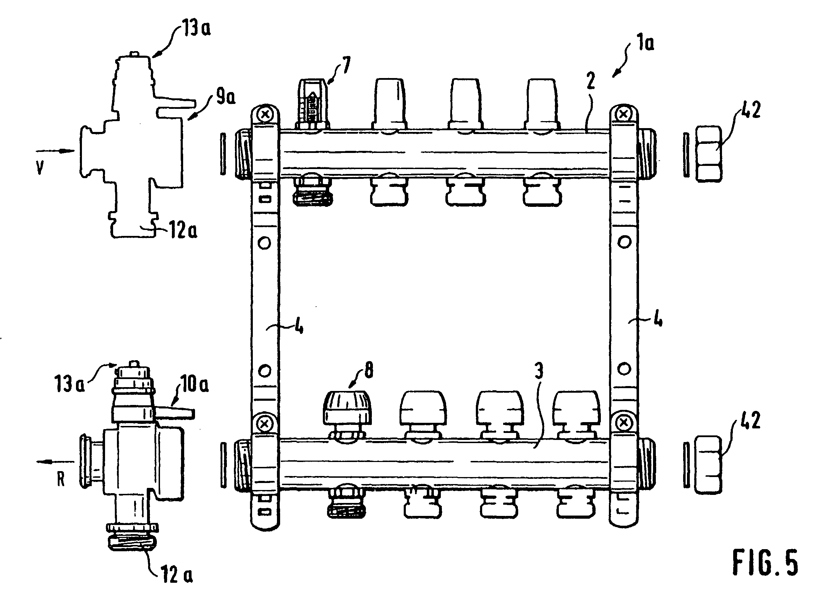

An den Vor- bzw. Rücklaufrohren 2 bzw. 3 befinden sich die Abzweigungen 5 für die Vorläufe bzw. 6 für die Rückläufe der einzelnen Heizkreise und, diesen zugeordnet, am Vorlaufrohr 2 die Anzeigeorgane 7 bzw. am Rücklaufrohr 3 die Regelorgane 8. Ein Ausführungsbeispiel für ein Anzeigeorgan 7 ist in Fig. 3 und eines für ein Regelorgan 8 in Fig. 4 dargestellt.

Der Heizkreisverteiler 1 wird kesselseitig ergänzt durch ein Absperrorgan 9, z.B. in Form eines Kugelhahns, am Vorlaufrohr 2 und ein weiteres entsprechendes Absperrorgan 10 am Rücklaufrohr 3. Auf der gegenüberliegenden Seite sind in einem Verteilerendstück 11 die üblichen Organe zum Füllen bzw. Entleeren 12 und Entlüften 13 vorgesehen.

In Fig. 3 ist teils in Ansicht, teils im Schnitt ein im Rahmen der Erfindung verwendbares Meß- und Anzeigeorgan für die Durchflußmenge dargestellt, das insgesamt mit 7 bezeichnet ist. Das Anzeigeorgan 7 ist, wie Fig. 1 zeigt, in das Vorlaufrohr 2 eingesetzt. Dabei reicht der Abzweigstutzen 5 als Einschraubteil mit einem Rohrstutzen 14 in das Vorlaufrohr 2 hinein.

Gegenüber dem Einschraubteil aus dem Abzweigstutzen 5 und dem Rohrstutzen 14 befindet sich ein ebenfalls eingeschraubtes Führungsteil 15 für ein Schauglas 16 aus transparentem Material. In dem Schauglas 16 ist ein Zeiger 17 sichtbar, der über eine Anzeigestange 18 mit einem Prallteller 19 in Verbindung steht. Der Prallteller 19 wird in dem Rohrstutzen 14 durch die Vorlaufströmung angeströmt. Eine Strömungsführungshülse 20 verbindet den Rohrstutzen 14 dichtend mit dem Führungsteil 15 bzw. dem Schauglas 16. Die Hülse 20 weist seitliche Öffnungen 21 auf, durch die das den Vorlauf bildende Medium, wie durch den Pfeil 22 angedeutet, in die Hülse 20 eintreten und das Vorlaufrohr 2 durch den Rohrstutzen 5 verlassen kann.

Das Schauglas 16 ist von einem Skalenträger 23 umgeben, der - einer Sichtöffnung benachbart - eine Skala 24 besitzt, mit welcher der Zeiger 17 zusammenwirkt. Das auf den Prallteller 19 treffende Medium bewegt diesen gegen ein Druckfederelement 25 nach unten, so daß je nach Durchflußmenge an der Skala der Stand des Zeigers 17 abgelesen werden kann.

Ein im Rahmen der Erfindung verwendbares Regelorgan ist in Fig. 4 größer dargestellt.

Dieses Regelorgan, das insgesamt mit 8 bezeichnet ist, ist in das Rücklaufrohr 3 eingesetzt. Ähnlich wie bei dem Anzeigeorgan 7 reicht von unten her ein Einschraubteil 30 mit einem Rohrstutzen 31 in den Innenraum des Rücklaufrohrs 3 hinein. Das obere Ende des Rohrstutzens 31 bildet einen Ventilsitz 32.

Von oben her ist in das Rücklaufrohr 3 wiederum ein Führungsteil 33 eingesetzt, in das ein Einsatzteil 34 zur Hubbegrenzung eingeschraubt ist. Das Einsatzteil 34 läuft nach oben hin in einen Vierkant 35 zur Betätigung mittels Werkzeug aus. Sowohl das Führungsteil 33, als auch das Einsatzteil 34 werden von einer Ventilstange 36 durchsetzt, die am unteren Ende einen Ventilkegel 37 und am oberen Ende einen Anschlagbund 38 besitzt, der gegen eine Schulter im Einsatzteil 34 stößt. Durch Einschrauben des Einsatzteils 34 können so die maximale Hubhöhe des Ventilkegels 37 und der Durchflußspalt 39 begrenzt werden.

Im dargestellten Ausführungsbeispiel ist auf das Regelorgan 8 ein elektrischer Stellantrieb 40 aufgesetzt, der ein elektrisches Anschlußkabel 41 aufweist. Über diesen Stellantrieb 40 kann in Abhängigkeit von einem Thermostat die Ventilstange 36 und damit der Ventilkegel 37 bis zur eingestellten Hubhöhe geöffnet und geschlossen und somit der Kreislauf geregelt werden.

Wie in Fig. 5 noch angedeutet ist, kann der erfindungsgemäße Heizkreisverteiler 1a noch weiter dadurch vereinfacht und wirtschaftlicher gestaltet werden, daß als Absperrorgane 9a, 10a solche nach dem deutschen Gebrauchsmuster 296 21 038 verwendet werden, die neben der Absperrfunktion durch einen Kugelhahn jeweils einen Anschluß 12a zum Füllen und Entleeren des Heizkreislaufs sowie eine automatische Entlüftungsvorrichtung 13a aufweisen. Auf der gegenüberliegenden Seite der Vor- bzw. Rücklaufrohre 2 bzw. 3 genügen dann einfache Verschlußkappen 42.

## Patentansprüche

1. Verteilervorrichtung für einen mit einem flüssigen Medium betriebenen Kreislauf einer Wärme- oder Kälteversorgungsanlage, wie z.B. einer Warmwasserheizungsanlage, zum Aufteilen des Mediums in einzelne Kreisläufe mit je einem Verteilerrohr für Vor- und Rücklauf (2 bzw. 3), sowie mit den einzelnen Kreisläufen zugeordneten Regel- und Absperrorganen (8) und gegebenenfalls mit Meß- und Anzeigeorganen (7), **dadurch gekennzeichnet, daß** die Regel- und Absperrorgane (8) jeweils in einer Armatur axial hintereinander mit nur einem frontal angeströmten Ventil zur Voreinstellung der maximalen Durchflußmenge und Regelung des jeweiligen Kreislaufs zusammengefaßt und ausschließlich im Rücklauf angeordnet sind.

2. Heizkreisverteiler nach Anspruch 1, **dadurch gekennzeichnet, daß** die Meßund Anzeigeorgane (7) im Vorlaufrohr (2) angeordnet sind.

3. Heizkreisverteiler nach Anspruch 2, **dadurch gekennzeichnet, daß** als Meßund Anzeigeorgane (7) Durchflußmengenanzeiger und gegebenenfalls Temperaturmeßgeräte vorgesehen sind.

4. Heizkreisverteiler nach einem der Ansprüche 1 bis 3, **dadurch gekennzeichnet, daß** die Verteilerrohre (2, 3) für Vor- und Rücklauf jeweils in horizontaler Lage und so zueinander angeordnet sind, daß das Vorlaufverteilerrohr (2) in der oberen und das Rücklaufverteilerrohr (3) in der unteren Ebene liegen.

## Claims

1. A distribution apparatus for a circuit of a hot or cold supply installation operating with a fluid medium, for example a hot-water heating installation, for splitting the medium into individual circuits with a respective distributor pipe for forward flow and return flow (2 and 3), and also with control and shut-off members (8) associated with the individual circuits and optionally with measuring and indicator members (7), **characterised in that** the control and shut-off members (8) are each arranged combined and exclusively in return flow in a fitting axially in series with only one valve, with frontal inflow, for presetting the maximum flow rate and controlling the respective circuit.

2. A heating circuit distributor according to Claim 1, **characterised in that** the measuring and indicator members (7) are disposed in the forward flow pipe (2).

3. A heating circuit distributor according to Claim 2, **characterised in that** flow rate indicators and optionally thermometers are provided as measuring and indicator members.

4. A heating circuit distributor according to any one of Claims 1 to 3, **characterised in that** the distributor pipes (2,3) for forward flow and return flow are each arranged in a horizontal position and are so arranged relative to one another that the forward flow distributor pipe (2) lies in the upper plane and the return flow distributor pipe (3) lines in the lower plane.

## Revendications

1. Dispositif de distribution pour un circuit d'une installation d'alimentation en chaud ou en froid fonctionnant avec un fluide liquide, telle qu'une installation de chauffage à eau chaude, par exemple, pour répartir le fluide dans différents circuits, avec chacun un tuyau de distribution pour l'aller et le retour (2 et 3), ainsi qu'avec les organes de régulation et d'arrêt (8) correspondant aux différents circuits et éventuellement avec des organes de mesure et de signalisation (7), **caractérisé en ce que** les organes de régulation et d'arrêt (8) sont regroupés dans un robinet dans le sens axial l'un derrière l'autre, avec seulement une vanne sur laquelle le flux arrive frontalement pour prérégler le débit maximal et réguler le circuit correspondant et **en ce qu'**ils sont disposés exclusivement dans le circuit de retour.

2. Distributeur de circuit de chauffage selon la revendication 1, **caractérisé en ce que** les organes de mesure et d'indication (7) sont disposés dans le tuyau aller (2).

3. Distributeur de circuit de chauffage selon la revendication 2, **caractérisé en ce que** les organes de mesure et d'indication (7) prévus sont des indicateurs de débit et éventuellement des thermomètres.

4. Distributeur de circuit de chauffage selon l'une quelconque des revendications 1 à 3, **caractérisé en ce que** les tuyaux de distribution (2, 3) pour l'aller et le retour sont disposés horizontalement et l'un par rapport à l'autre de telle manière que le tuyau de distribution aller (2) est situé dans le plan supérieur et le tuyau de distribution retour (3) dans le plan inférieur.
